# EUROPEAN PATENT SPECIFICATION

(11) **EP 3 457 079 B1**
(45) Date of publication and mention of the grant of the patent: **05.08.2020**
(21) Application number: 18192987.8
(22) Date of filing: 06.09.2018
(51) Int. Cl.: G01B 21/08, G01N 3/56

(54) **WEAR SENSOR**
VERSCHLEISSSENSOR
CAPTEUR D'USURE

(30) Priority: 19.09.2017 IT 201700104763
(43) Date of publication of application: 20.03.2019
(73) Proprietor: Techno Surface Sas di Bulli Elisabetta & C., 20129 Milano MI (IT)
(72) Inventor: REDAELLI, Paolo, I-20853 Biassono (MB) (IT)
(74) Representative: Parisi, Luigi

(56) References cited:
- EP-A1- 0 637 697
- AU-A4- 2016 100 152
- US-A- 4 655 077
- US-A1- 2006 208 902
- US-A1- 2007 163 325

## Description

The object of the present invention is a wear sensor for detecting the degree of wear of a polymeric material.

In particular, the present invention has as object a radial wear sensor applicable to abrasion-resistant surface coatings such as vibratory-finishing vat coatings, grids and screens, rollers, kinematic chains for wear-resistant pumps and similar products.

As is well known, in many industrial fields, the phenomenon of wear of components subjected to heavy-duty use is of particular importance.

For example, in the field of vibratory finishing, fixed or rotating vats containing abrasive media suitable for the various processes required are used.

The pieces to be processed are placed in these vats and a reciprocal movement is imparted between the pieces and the finishing media contained in the vat.

In turn, the vats generally have a metal bottom covered with a layer of wear-resistant polymer.

During finishing operations, the forces created on the vat tend to cause wear on the wear-resistant polymer coating layer.

This layer can wear up to the point where it no longer covers all or part of the metal bottom of the vat, which in turn is exposed to wear, and can even be perforated at certain points, with a consequent serious economic impact and impact on processing times. Similar problems may also occur in other industries where components made of or lined with polymeric material are used.

For example, the screening sector, whether in stone quarries or in other types of mechanical screening or selection, makes extensive use of load-bearing or non-load-bearing polyurethane grids.

However, during and after the use of such screening planes or grids it is uncomfortable, if not difficult, to continuously and closely monitor their level of wear.

Many other industrial applications require the use of rollers coated with polyurethane (but also with other elastomers or polymers), for example in the field of coils rollers, in the steel sector.

Another area where component wear problems are important is that of impeller or pump bodies made of polyurethane and similar elastomers.

Finally, wear problems are also found, for example, in the lining of loading hoppers, weighing hoppers, discharge hoppers from mixing units and all types of vats or silos.

EP 0 637 697 A1 discloses a probe for indicating wear of a brake pad.

A purpose of this invention is to provide a system that adequately monitors the level of wear of industrial components made of or lined with polymeric material.

These components include vibratory finishing vats with bottoms covered with polymeric material, grids that can be used for screening or not, either in stone quarries or in other types of sieves or mechanical selections, on rollers covered with polyurethane, for example in the field of rollers for coils, in the steel sector, rotating bodies or pump bodies in polyurethane and similar elastomers and coatings of loading hoppers, weighing hoppers, unloading hoppers from mixing groups and all types of vats or silos and other applications.

This aim is achieved by virtue of a system comprising an object or a coating made of polymeric material and a sensor for detecting the degree of wear of the object or of the coating made of polymeric material, wherein the sensor comprises a body made of polymeric material, said body being immersed in or covered by the polymeric material of which wear has to be measured, wherein said body has a plurality of reliefs each having an apex placed at a different height, and wherein a connection for each of the apexes is provided, the connection being configured when interrupted to signal to a control unit progressively more severe levels of wear when the wear of the polymeric material of the object or of the coating propagates to the respective apex of the sensor.

An advantage of this solution is that it makes available a particular type of sensor, whose main function is to detect the level of wear of an elastomer or polymer coating of a metal or other polymer body, or of the body itself made entirely of elastomer or generally of polymeric material.

The operating principle of this sensor is that it is applied to the surface to be coated, for example to the bottom of a vibratory finishing vat or other industrial component. The vat can then be lined up to cover the sensor, even abundantly, immersing it in the polymeric material whose wear is to be measured.

Since the apexes of the sensor body are arranged in such a way as to signal progressively more severe levels of wear to a control system, there is also the advantage that, depending on the connection to the control system that has been interrupted, a signal of slight, medium, severe or extreme wear is generated.

According to an invention embodiment, the connection with the control unit is an electrical connection between an apex of the sensor body and a control unit.

An advantage of this solution is that the cable carries electricity. The interruption of the passage of electricity determines a change of state (e.g. from 1 to 0) indicating a particular condition of wear.

According to one embodiment of the invention, the connection to the control unit is an optical connection made via a fiberglass cable between an apex of the sensor body and a control unit.

An advantage of this solution is that it avoids "polluting" by releasing heavy metals during the wear of the sensor connection. In this case, using a glass fibre cable, which conducts light between an emitter and a sensor receiver, the interruption of the light passage causes a change in state (e.g. from 1 to 0), as in the previous case.

According to a further embodiment of this invention, the connection to the control unit is a fluidic connection between an apex of the sensor body and the control unit.

According to a further embodiment of this invention, the connection between a sensor body apex and the control unit is an inductive RFID connection or a wireless connection secured by a battery or a kinetic power source.

According to another embodiment of the present invention, the polymeric material of the sensor body is equal to the polymeric material of the coating or object whose wear is to be measured, or is a polymeric material having mechanical properties very similar to those of the polymeric material of the coating or object whose wear is to be measured.

According to another embodiment of the present invention, the hardness of the polymeric material of which the sensor is composed is equal to or slightly less than the hardness of the first polymeric material of which to measure wear
It is necessary, in fact, that in the moment in which the coating - for example starting from 90 ShA of hardness - should begin to give way, the wearing material does not find a weak point in which to accelerate its action thanks to the sensor - for this reason the hardnesses must be possibly equivalent.

Another embodiment of the invention provides a vat for the containment of surface treatment media of pieces to be finished, where that vat includes a metal bottom, said bottom being covered with a coating of polymeric material, wherein the vat includes at least a wear sensor as described above, wherein the wear sensor is embedded in or covered by the coating of polymer material of the vat.

This solution makes it possible to work on the vibro-finishing vat before the wear of its polymer covering reaches the level of the metal bottom of the vat itself.

According to an embodiment of the invention, wear sensors are arranged in the vat in a radial configuration where the lower apexes of the sensor body are oriented towards the center of the vat.

This solution is designed precisely so that the area of the lower sensor is specially oriented towards the center of the vat towards which the vibration tends to wear out more the anti-abrasive coating.

Another embodiment of the invention includes a load-bearing grid for screening or sieving stones or other mechanical selections, where the grid is made of or lined with polymeric material, where the grid includes at least a wear sensor embedded in or covered by the polymeric material.

The use of such sensors in the screening industry will be of great benefit.

A further embodiment of the present invention involves a roller coated with polymeric material, where the roller includes at least one wear sensor embedded in or covered with the polymeric material.

A further embodiment of this invention is a pump impeller casing where the impeller casing is made of polymeric material, where the impeller casing includes at least one wear sensor is embedded in or covered by the polymeric material.

Finally, another embodiment of the invention includes a hopper made of or lined with polymeric material, where the hopper includes at least one wear sensor, where the wear sensor is embedded in or covered with the polymeric material.

Further characteristics of the invention can be deduced from the dependent claims.

Further characteristics and advantages of the invention will be apparent by reading of the following description provided by way of non limitative example, with the help of the figures illustrated in the attached tables, in which:
- Figure 1 shows a first embodiment of a wear sensor according to the present invention in an operating condition;
- Figure 2 shows a wear sensor according to the present invention in a view from above;
- Figure 3 shows a first embodiment of a wear sensor according to the present invention in a second operating condition;
- Figure 4 shows another embodiment of a wear sensor according to the present invention;
- Figure 5 shows an axonometric view of the wear sensor according to the present invention before being embedded in a coating whose wear is to be measured;
- Figure 6 shows an axonometric view of a production step of a wear sensor according to the present invention;
- Figure 7 shows a plan view of a vibratory finishing vat to which four sensors are applied according to this invention; and
- Figure 8 shows a plan view of a vibratory finishing vat, showing the connections of the sensors to a control unit.

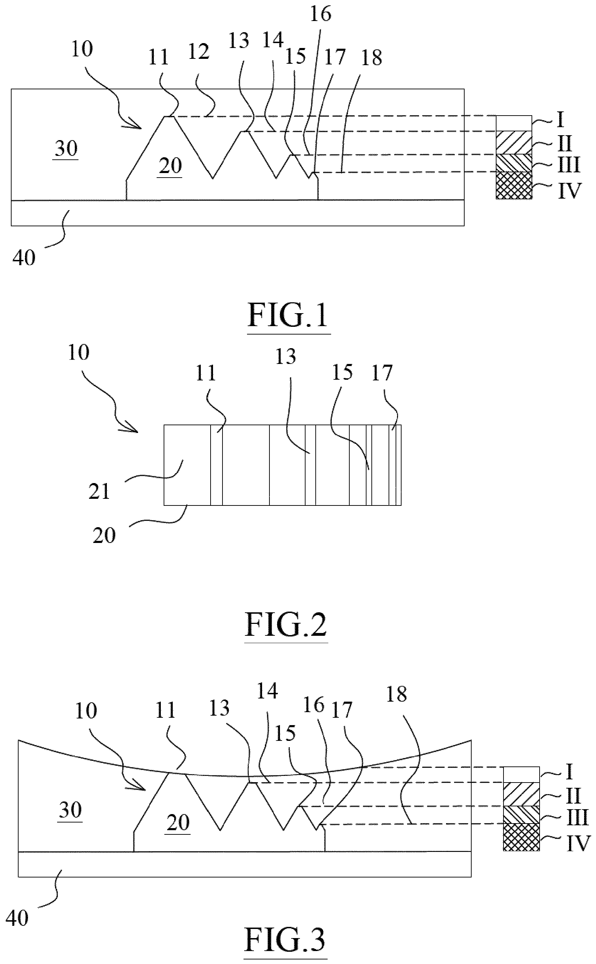

The invention will now be described with initial reference to Figure 1, which illustrates a first embodiment of the present invention, globally indicated by numerical reference 10.

Sensor 10 is configured to detect the degree of wear of an object or of a polymer coating 30.

Non-limitative examples of such polymeric objects or coatings may be polymeric coatings for vibratory finishing vats, for load-bearing grids for screening or not for screening.

Other applications may concern polyurethane coated rollers, for example in the field of coils rollers, in the steel sector, rotating bodies or pump bodies in polyurethane and similar elastomers and coatings of loading hoppers, weighing hoppers, discharge hoppers from mixing groups and any type of vat or silos and other applications.

As is well known, polymeric materials derive from the polymerisation reaction of a quantity of basic molecules (monomers) to form even very long chains.

A polymeric material is generally composed of macromolecules consisting of the same type of repetitive unit.

Examples of polymeric materials include polyurethanes, elastomers such as silicone rubbers and rubbers, and other polymers.

As shown in figure 1, sensor 10 includes a body 20 made of polymeric material.

The polymeric material of the body 20 of the sensor 10 may be equal to that of the coating 30 or article of which wear must be measured, or it may be a polymer having mechanical properties very similar to those of the coating 30 material or article of which wear must be measured.

Preferably, the hardness of the polymer material of which sensor 10 is composed is equal to or slightly less than the hardness of the polymer material of which to measure wear.

The body 20 of the sensor is configured to be immersed in the polymer material whose wear is measured and said body 20 has a number of reliefs 21, 22, 23, 24 each one having an apex 11, 13, 15, 17 placed at a different height.

In a variant of the invention, the sensor 10, instead of being immersed in the polymer material whose wear is to be measured, is covered by it.

For each of the apexes 11,13,15,17 of sensor 10 there is a connection 12,14,16,18 configured as to signal to a control unit 100, progressively more severe levels of wear when the wear of the polymer material whose wear is measured spreads to the respective apex 11,13,15,17 of sensor 10.

The progressively more severe levels of wear are therefore associated with first, second, third level wear signals and so on until the last serious wear alarm level.

For example in Figure 1 Level I is associated with a first level wear alarm, Level II is associated with a medium level wear alarm, Level III is associated with an advanced wear alarm and Level IV is associated with a severe wear alarm. Other connection and configurations of alarms are possible.

To manage these different alarm levels, the control unit 100 can be connected to a memory unit 110 containing its operating software.

To generate such alarm signals, sensor 10 shall be connected to control unit 100, with each apex separately connected to control unit 100, so that the interruption of its connection is such that a corresponding alarm I, II, III and IV is generated.

According to an embodiment of the invention, the connection with the control unit 100 is an electrical connection between an apex of the sensor body and the control unit 100.

An advantage of this solution is that the cable conducts electricity. The interruption of the passage of electricity determines a change of state (e.g. from 1 to 0) signaling a condition of wear.

According to one embodiment of the invention, the connection with the control unit is an optical connection made by means of a fiberglass cable between an apex of the sensor body and a control unit.

An advantage of this solution is that it avoids "polluting" by releasing heavy metals during the wear of the sensor connection. In this case, using a fiberglass cable, which conducts light between an emitter and a receiver of the sensor and the interruption of the passage of light causes a change in state (e.g. 1 to 0), as in the previous case.

Alternatively, the connection to the control unit 100 can be a fluid connection between a tip of the sensor body and the control unit.

Figure 3, for example, illustrates an operating condition of the sensor where the first connection 12 (corresponding to apex 11) is interrupted, generating a first level wear alarm.

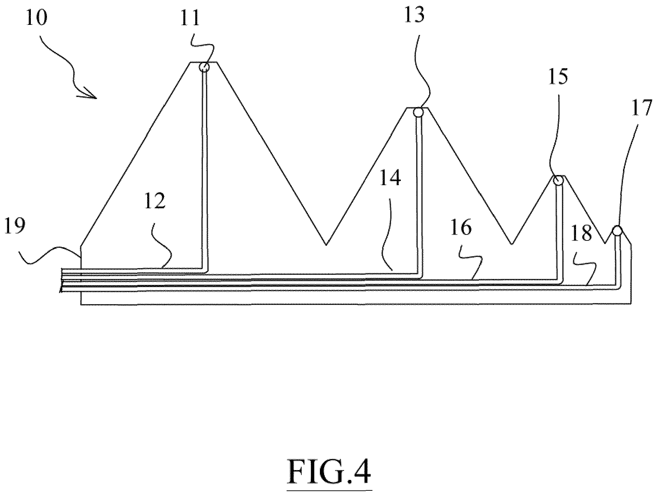

Figure 4 shows another embodiment of a wear sensor according to the present invention, in which in particular the connections 12,14,16,18 of sensor 10 are oriented towards the highest side of each apex having four sloping heights, while the remaining portions of the connections 12,14,16,18 are immersed into the body 20 of the sensor 10 and protrude on one side 19 of the same body 20.

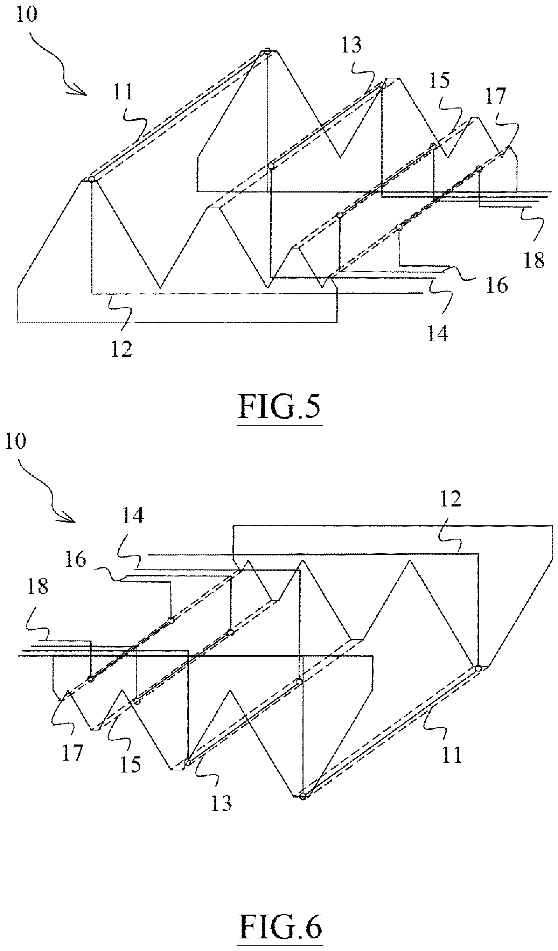

Figure 5 shows an axonometric view of the wear sensor according to the present invention before being immersed in a coating whose wear to be measured.

Figure 6 shows an axonometric view of a production step of the wear sensor.

In this case, the sensor connections, such as electrical cables, are configured inside a mold, before receiving a cast of polymeric material, such as polyurethane that makes the sensor 10 a unique body. In this configuration, the cables face the lower side of the sensor positioning mask in the pouring mold. The presence of a metal or polymeric frame, e.g. made by rapid prototyping, could be envisaged.

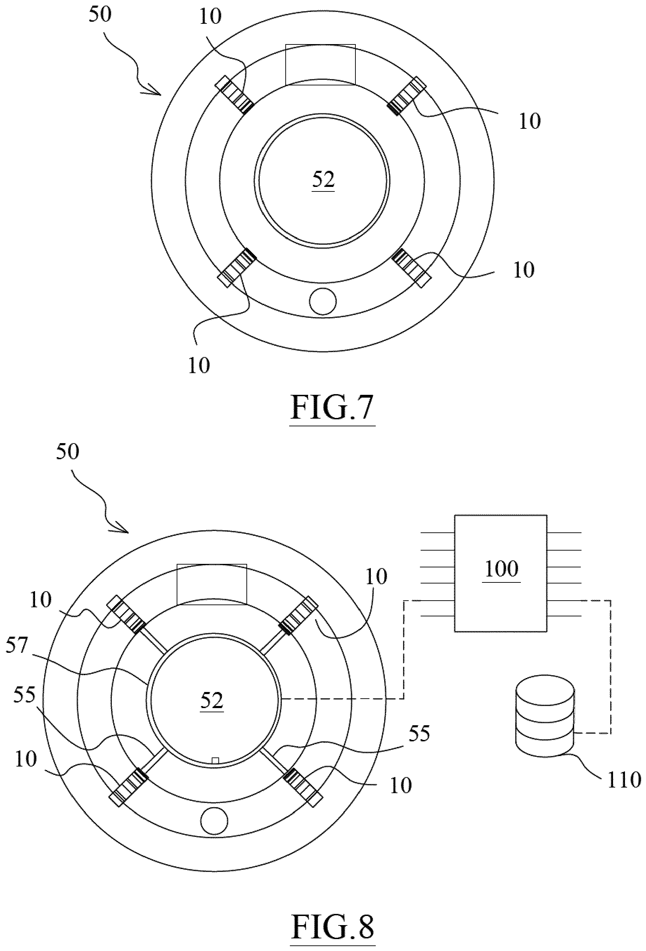

Figure 7 shows a plan view of a vat 50 for vibratory finishing work to which four sensors are applied according to this invention.

Vat 50 has a metal bottom, said bottom being covered with a covering in polymeric material.

An example of anti-wear coating par excellence, but not limited to the possibilities of the invention, is represented by the various families of polyurethanes, rubbers and silicone rubbers.

Vat 50 incorporates at least one wear sensor of the type described above, where that wear sensor 10 is embedded in or covered by that polymer liner.

In the example shown, the vat 50 is of the type with trapezoidal section bottom and equipped with central body 52.

Preferably in vat 50, the wear sensors 10 are arranged in a radial configuration in which the lower apex 17 of the body 20 of the sensor 10 are oriented towards the centre of the vat 50.

The area of the lower sensor is specially oriented towards the center of the vat towards which the vibration tends to wear out more the anti-abrasive coating.

Figure 8 shows a plan view of a vibratory finishing vat in which the connections of the sensors to a control unit 100 are indicated.

In particular, the wear sensors 10 are connected each to the control unit 100 by means of a flat cable 55 adherent to the bottom of the vat 50 in a first length and to the central body 52 of the vat in a second length and then converge in a single cable terminal 57 that goes down through the inner side of the central body 52 until it connects with a terminal block on the base of the vat 50 for connection to the control unit 100.

Alternatively, the sensor 10 can also be independent and wireless, in order to communicate with the control unit 100 via Wi-Fi or other known wireless connection, taking advantage of its own autonomy ensured by a battery or a generative kinetic source of current, for example thanks to the vibratory or rotational movement of the vat 50, as for bicycles or car wheels.

Alternatively, the connection between sensor 10 and control unit 100 can be an inductive RFID (Radio Frequency Identification) connection.

Further applications of the sensor 10 of the invention may be as follows.

Firstly, the sensors 10 can be applied to a load-bearing grid for screeing stones or other mechanical selections, where the load-bearing grid is made of or lined with polymeric material, where the load-bearing grid has at least one wear sensor 10 as described, where the wear sensor 10 is embedded in or covered with polymeric material.

Secondly, the sensors 10 can be applied to rollers coated with polymeric material.

Also in this case, the wear sensor 10 is immersed or covered by the polymer coating.

In this regard, it should be noted that the continuous monitoring of advanced sensors can determine improved quality factors of the process managed by the roller, if not increased safety factors (for example in the field of coils rollers, in the steel sector). In addition, the sensors 10 can be applied to pump impellers where the impellers are made of polymeric material.

Once properly monitored, the impeller bodies or, if necessary, the impellers themselves, could generate new scenarios of technological enrichment and offer possible developments in fields where exceptional levels of reliability are required.

Finally, the sensors can be applied to hoppers made of or lined with polymeric material, or in all those cases where monitoring of the hopper cladding is desirable.

Obviously, modifications or improvements may be made to the invention as described for contingent or particular reasons, without going beyond the scope of the invention as claimed below.

## Claims

1. A system comprising an object or a coating (30) made of polymeric material and a sensor (10) for detecting the degree of wear of the object or of the coating (30) made of polymeric material, wherein the sensor (10) comprises a body (20) made of polymeric material, said body (20) being immersed in or covered by the polymeric material of which wear has to be measured, wherein said body (20) has a plurality of reliefs (21,22,23,24) each having an apex (11,13,15,17) placed at a different height, and wherein a connection (12,14,16,18) for each of the apexes (11,13,15,17) is provided, the connection being configured when interrupted to signal to a control unit (100) progressively more severe levels of wear when the wear of the polymeric material of the object or of the coating (30) propagates to the respective apex (11,13,15,17) of the sensor (10).

2. A system as in claim 1, wherein said connection (12, 14, 16, 18) is an electrical connection, or an optical connection made by a fiberglass cable, or is a fluid connection, each of said connections being made between an apex of the body (20) of the sensor (10) and the control unit (100).

3. A system as in claim 1, wherein said connection (12,14,16,18) between an apex of the body (20) of the sensor (10) and the control unit (100) is an inductive RFID connection or a wireless connection powered by a battery or by a kinetic source for generating electrical current.

4. A system as in claim 1, wherein the polymeric material of the body (20) of the sensor (10) is equal to the polymeric material of the coating (30) or of the object of which wear has to be measured, or is a polymeric material having mechanical properties very similar to that of the polymeric material of the coating (30) or of the object of which wear has to be measured.

5. A system as in claim 1, wherein the hardness of the polymeric material of which the sensor (10) is made is equal to or is slightly less than the hardness of the polymeric material of the coating (30) or of the object of which wear has to be measured.

6. A vat (50) for the containment of media for surface treatment of finishing pieces, wherein said vat (50) comprises a metallic bottom (40), said bottom (40) being coated with a coating (30) of polymeric material, said vat (50) comprising at least one wear sensor (10) as claimed in one or more of the preceding claims, wherein said wear sensor (10) is immersed in or coated with the polymeric coating of the vat (50).

7. The vat (50) as in claim 6, wherein the wear sensors (10) are arranged in a radial configuration where the lower apexes (16) of the body (20) of the sensor (10) are oriented towards the center of the vat (50).

8. The vat (50) as claimed in claim 6, wherein the wear sensors (10) are each connected to the control unit (100) or by a flat cable (55) adhering to the bottom of the vat (50) for a certain length and to a central body (52) of the vat (50) for another length and then converge into a single terminal cable (57) which passes through the inner side of the central body (52) until it is coupled with a terminal block on the base of the vat (50).

9. A load-bearing grid for stone screening or other mechanical selections, where said grid is made of or coated with polymeric material, wherein said grid comprises at least one wear sensor (10) as in claims 1-5, wherein said wear sensor (10) is immersed in or coated with polymeric material.

10. A roller coated in polymeric material, said roller comprising at least one wear sensor (10) as claimed in claims 1-5, wherein said wear sensor (10) is immersed in or coated with polymeric material.

11. An impeller for pumps wherein said impeller is made of polymeric material, wherein said impeller body comprises at least one wear sensor (10) as in claims 1-5, wherein said wear sensor (10) is immersed in or coated with polymeric material.

12. A hopper made of or covered with polymeric material, wherein said hopper comprises at least one wear sensor (10) as claimed in claims 1-5, wherein said wear sensor (10) is immersed in or coated with the polymeric material.

## Patentansprüche

1. System, umfassend ein Objekt oder eine Beschichtung (30) aus Polymermaterial und einen Sensor (10) zum Erfassen des Verschleißgrades des Objekts oder der Beschichtung (30) aus Polymermaterial, wobei der Sensor (10) einen Körper (20) aus Polymermaterial umfasst, wobei der Körper (20) in das Polymermaterial eingetaucht ist oder von dem Polymermaterial bedeckt ist, dessen Verschleiß gemessen werden soll, wobei der Körper (20) eine Vielzahl von Reliefs (21, 22, 23, 24) aufweist, jeweils mit einer Spitze (11, 13, 15, 17), die auf einer verschiedenen Höhe angeordnet ist, und wobei eine Verbindung (12, 14, 16, 18) für jede der Spitzen (11, 13, 15, 17) vorgesehen ist, wobei die Verbindung so konfiguriert ist, dass sie bei Unterbrechung einer Steuereinheit (100) einen zunehmend stärkeren Verschleiß signalisiert, wenn sich der Verschleiß des Polymermaterials des Objekts oder der Beschichtung (30) zur jeweiligen Spitze (11, 13, 15, 17) des Sensors (10) propagiert.

2. System nach Anspruch 1, wobei die Verbindung (12, 14, 16, 18) eine elektrische Verbindung oder eine aus Glasfaserkabel hergestellte optische Verbindung oder eine Fluidverbindung ist, wobei jede der Verbindungen zwischen einer Spitze des Körpers (20) des Sensors (10) und der Steuereinheit (100) hergestellt ist.

3. System nach Anspruch 1, wobei die Verbindung (12, 14, 16, 18) zwischen einer Spitze des Körpers (20) des Sensors (10) und der Steuereinheit (100) eine induktive RFID-Verbindung oder eine von einer Batterie oder von einer kinetischen Quelle zur Erzeugung von elektrischem Strom angetriebene drahtlose Verbindung ist.

4. System nach Anspruch 1, wobei das Polymermaterial des Körpers (20) des Sensors (10) gleich dem Polymermaterial der Beschichtung (30) oder des Gegenstandes ist, dessen Verschleiß gemessen werden soll, oder ein Polymermaterial mit mechanischen Eigenschaften ist, die denen des Polymermaterials der Beschichtung (30) oder des Gegenstands, dessen Verschleiß gemessen werden soll, sehr ähnlich sind.

5. System nach Anspruch 1, wobei die Härte des Polymermaterials, aus dem der Sensor (10) besteht, gleich oder geringfügig geringer als die Härte des Polymermaterials der Beschichtung (30) oder des Gegenstands, dessen Verschleiß gemessen werden soll, ist.

6. Wanne (50) für die Aufnahme von Medien zur Oberflächenbehandlung von Endbearbeitungsstücken, wobei die Wanne (50) einen Metallboden (40) umfasst, wobei der Boden (40) mit einer Beschichtung (30) aus Polymermaterial beschichtet ist, wobei die Wanne (50) mindestens einen Verschleißsensor (10) gemäß einem oder mehreren der vorherigen Ansprüche umfassend, wobei der Verschleißsensor (10) in die Polymerbeschichtung der Wanne (50) eingetaucht ist oder mit der Polymerbeschichtung beschichtet ist.

7. Wanne (50) nach Anspruch 6, wobei die Verschleißsensoren (10) in einer radialen Konfiguration angeordnet sind, wobei die unteren Spitzen (16) des Körpers (20) des Sensors (10) zur Mitte der Wanne (50) hin ausgerichtet sind.

8. Wanne (50) nach Anspruch 6, wobei die Verschleißsensoren (10) jeweils mit der Steuereinheit (100) oder durch ein Flachkabel (55) verbunden sind, das für eine bestimmte Länge am Boden der Wanne (50) und zu einem zentralen Körper (52) der Wanne (50) für eine andere Länge haftet und dann zu einem einzelnen Anschlusskabel (57) konvergieren, das durch die Innenseite des zentralen Körpers (52) verläuft, bis es mit einem Anschlussblock der Basis der Wanne (50) verbunden ist.

9. Tragendes Gitter für Steinsiebung oder andere mechanische Auswahlverfahren, wobei das Gitter aus Polymermaterial besteht oder mit Polymermaterial beschichtet ist, wobei das Gitter mindestens einen Verschleißsensor (10) gemäß einem der Ansprüche 1 bis 5 umfasst, wobei der Verschleißsensor (10) in Polymermaterial eingetaucht ist oder mit Polymermaterial beschichtet ist.

10. Walze, die mit Polymermaterial beschichtet ist, wobei die Walze mindestens einen Verschleißsensor (10) gemäß einem der Ansprüche 1 bis 5 umfasst, wobei der Verschleißsensor (10) in Polymermaterial eingetaucht ist oder mit Polymermaterial beschichtet ist.

11. Impeller für Pumpen, wobei der Impeller aus Polymermaterial besteht, wobei der Impeller mindestens einen Verschleißsensor (10) gemäß einem der Ansprüche 1 bis 5 umfasst, wobei der Verschleißsensor (10) in Polymermaterial eingetaucht ist oder mit Polymermaterial beschichtet ist.

12. Trichter, hergestellt aus oder bedeckt mit Polymermaterial, wobei der Trichter mindestens einen Verschleißsensor (10) gemäß einem der Ansprüche 1 bis 5 umfasst, wobei der Verschleißsensor (10) in das Polymermaterial eingetaucht ist oder mit Polymermaterial beschichtet ist.

## Revendications

1. Système comprenant un objet ou un revêtement (30) en matériau polymère et un capteur (10) pour détecter le degré d'usure de l'objet ou du revêtement (30) en matériau polymère, dans lequel le capteur (10) comprend un corps (20) en matériau polymère, ledit corps (20) étant immergé dans ou recouvert par le matériau polymère dont l'usure doit être mesurée, dans lequel ledit corps (20) présente une pluralité de reliefs (21, 22, 23,24) ayant chacun un sommet (11, 13, 15, 17) placé à une hauteur différente, et dans lequel une connexion (12, 14, 16, 18) pour chacun des sommets (11, 13, 15, 17) est prévue, la connexion étant configurée, lorsqu'elle est interrompue, pour signaler à une unité de commande (100) des niveaux d'usure progressivement plus sévères lorsque l'usure du matériau polymère de l'objet ou du revêtement (30) se propage au sommet respectif (11, 13, 15, 17) du capteur (10).

2. Système selon la revendication 1, dans lequel ladite connexion (12, 14, 16, 18) est une connexion électrique, ou une connexion optique réalisée par un câble en fibre de verre, ou est une connexion fluidique, chacune desdites connexions étant réalisée entre un sommet du corps (20) du capteur (10) et l'unité de commande (100).

3. Système selon la revendication 1, dans lequel ladite connexion (12, 14, 16, 18) entre un sommet du corps (20) du capteur (10) et l'unité de commande (100) est une connexion RFID inductive ou une connexion sans fil alimentée par une batterie ou par une source cinétique pour générer un courant électrique.

4. Système selon la revendication 1, dans lequel le matériau polymère du corps (20) du capteur (10) est égal au matériau polymère du revêtement (30) ou de l'objet dont l'usure doit être mesurée, ou est un matériau polymère ayant des propriétés mécaniques très similaires à celles du matériau polymère du revêtement (30) ou de l'objet dont l'usure doit être mesurée.

5. Système selon la revendication 1, dans lequel la dureté du matériau polymère dont est constitué le capteur (10) est égale ou légèrement inférieure à la dureté du matériau polymère du revêtement (30) ou de l'objet dont l'usure doit être mesurée.

6. Cuve (50) destinée à contenir des média pour le traitement de finissage de surface de pièces, dans laquelle ladite cuve (50) comprend un fond métallique (40), ledit fond (40) étant revêtu d'un revêtement (30) de matériau polymère, ladite cuve (50) comprenant au moins un capteur d'usure (10) tel que revendiqué dans une ou plusieurs des revendications précédentes, dans laquelle ledit capteur d'usure (10) est immergé dans ou revêtu du revêtement polymère de la cuve (50).

7. Cuve (50) selon la revendication 6, dans laquelle les capteurs d'usure (10) sont disposés selon une configuration radiale où les sommets inférieurs (16) du corps (20) du capteur (10) sont orientés vers le centre de la cuve (50).

8. Cuve (50) selon la revendication 6, dans laquelle les capteurs d'usure (10) sont chacun reliés à l'unité de commande (100) ou par un câble plat (55) adhérant au fond de la cuve (50) pour une certaine longueur et à un corps central (52) de la cuve (50) pour une autre longueur et convergent ensuite en un seul câble terminal (57) qui passe à travers le côté intérieur du corps central (52) jusqu'à ce qu'il soit couplé à un bloc terminal sur la base de la cuve (50).

9. Grille porteuse pour le criblage de pierres ou d'autres sélections mécaniques, où ladite grille est faite de ou revêtue de matériau polymère, dans laquelle ladite grille comprend au moins un capteur d'usure (10) selon les revendications 1 à 5, dans laquelle ledit capteur d'usure (10) est immergé dans ou revêtu de matériau polymère.

10. Rouleau revêtu de matériau polymère, ledit rouleau comprenant au moins un capteur d'usure (10) selon les revendications 1 à 5, dans lequel ledit capteur d'usure (10) est immergé dans ou revêtu de matériau polymère.

11. Roue pour pompes, dans laquelle ladite roue est faite de matériau polymère, dans laquelle ledit corps de roue comprend au moins un capteur d'usure (10) selon les revendications 1 à 5, dans laquelle ledit capteur d'usure (10) est immergé dans ou revêtu de matériau polymère.

12. Trémie fabriquée en ou recouverte d'un matériau polymère, dans laquelle ladite trémie comprend au moins un capteur d'usure (10) selon les revendications 1 à 5, dans laquelle ledit capteur d'usure (10) est immergé dans ou recouvert du matériau polymère.
